# EUROPEAN PATENT APPLICATION

(11) **EP 4 651 219 A1**
(43) Date of publication of application: **19.11.2025**
(21) Application number: 23916454.4
(22) Date of filing: 26.12.2023
(51) Int. Cl.: H01M 4/13, H01M 4/36, H01M 4/38, H01M 4/48, H01M 4/587, H01M 4/62, H01M 4/139, H01M 10/052, H01M 4/02

(54) **NEGATIVE ELECTRODE, KIT FOR PREPARING NEGATIVE ELECTRODE MIXTURE LAYER, AND NEGATIVE ELECTRODE MANUFACTURING METHOD**

(30) Priority: 12.01.2023 KR 20230004840
(71) Applicant: SK On Co., Ltd., Seoul 03161 (KR)
(72) Inventor: LEE, Yong Hee, Daejeon 34124 (KR)
(74) Representative: Stolmár & Partner Patentanwälte PartG mbB
(86) International application number: PCT/KR2023/021608
(87) International publication number: WO 2024/150971

(57) **Abstract**

A negative electrode according to an embodiment of the present invention, comprises: a negative electrode current collector; and a negative electrode mixture layer formed on at least one side of the negative electrode current collector and including a silicon-based material and a binder, wherein the negative electrode mixture layer includes a first layer in contact with the negative electrode current collector on the negative electrode current collector and a second layer in contact with the first layer on the first layer, and the weight ratio of the binders respectively included in the upper half of the first layer in the thickness direction and the second layer may be 5:1 or more.

## Description

### [Technical Field]

The present invention relates to a negative electrode, a kit for preparing negative electrode mixture layer, and a negative electrode manufacturing method.

### [Background Art]

With the development of the electronics, telecommunications, and space industries, the demand for lithium secondary batteries as energy sources is rapidly increasing. In particular, as the importance of global eco-friendly policies is emphasized, the electric vehicle market is growing rapidly, and research and development on lithium secondary batteries are being actively carried out at home and abroad.

A lithium secondary battery includes a positive electrode (cathode), a negative electrode (anode), and a separator interposed therebetween, and the positive electrode and the negative electrode are each provided with an active material which lithium ions may be inserted into and extracted from.

The negative electrode of the lithium secondary batteries generally uses natural graphite and artificial graphite, but due to the low energy density of graphite, research is being conducted to improve energy density by developing new negative electrode materials.

### [Disclosure]

### [Technical Problem]

The present invention provides a negative electrode, a kit for preparing negative electrode mixture layer, and a negative electrode manufacturing method capable of improving the energy density and the capacity retention rate of a secondary battery.

### [Technical Solution]

A negative electrode according to the present invention includes: a negative electrode current collector; and a negative electrode mixture layer formed on at least one side of the negative electrode current collector and including a silicon-based material and a binder, wherein the negative electrode mixture layer includes a first layer in contact with the negative electrode current collector on the negative electrode current collector and a second layer in contact with the first layer on the first layer, and wherein a weight ratio of the binders respectively included in an upper half of the first layer in a thickness direction and the second layer may be 5:1 or more.

A kit for preparing negative electrode mixture layer according to the present invention includes: a first composition including a silicon-based material and a binder; and a second composition including a silicon-based material but not including the binder.

A negative electrode manufacturing method according to the present invention includes: forming a first layer by applying a first composition, which includes a silicon-based material and a binder, onto a negative electrode current collector; and forming a second layer by applying a second composition, which includes a silicon-based material but does not include the binder, onto the first layer.

### [Advantageous Effects]

According to a technology of the present invention, the energy density of a secondary battery and a capacity retention rate during rapid charging of the secondary battery may be improved.

### [Description of Drawings]

FIG. 1 is a diagram illustrating a structure of a negative electrode according to an embodiment of the present invention.
FIG. 2 is an image showing the distribution of a binder in a negative electrode according to an embodiment of the present invention.
FIG. 3 is a graph showing a difference in life characteristics of secondary batteries including negative electrodes according to an inventive example of the present invention and comparative examples.
FIG. 4 is a graph showing a difference in power characteristics of secondary batteries including negative electrodes according to an inventive example of the present invention and a comparative example.

### [Best Modes of the Invention]

Specific structural or functional descriptions disclosed herein are merely illustrative for the purpose of describing embodiments according to the technical spirit of the present invention. Embodiments according to the technical spirit of the present invention may be implemented in various forms in addition to the embodiments disclosed herein, and should not be construed as being limited to the specific embodiments set forth herein.

Hereinafter, a negative electrode according to the present invention and a secondary battery including the same will be described.

### <Negative electrode>

A negative electrode according to the present invention may include: a negative electrode current collector; and a negative electrode mixture layer formed on at least one side of the negative electrode current collector and including a silicon-based material and a binder, the negative electrode mixture layer includes a first layer in contact with the negative electrode current collector on the negative electrode current collector and a second layer in contact with the first layer on the first layer, and a weight ratio of the binders respectively included in an upper half of the first layer in a thickness direction and the second layer is 5:1 or more.

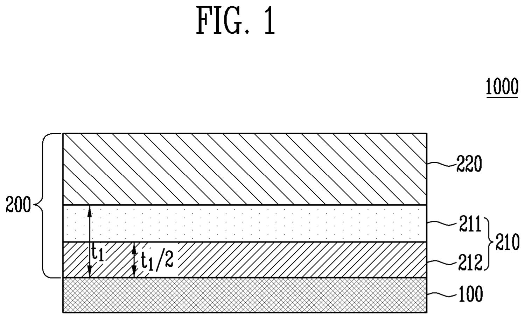

A negative electrode 1000 according to the present invention may include a negative electrode current collector 100 and a negative electrode mixture layer 200 formed on at least one side of the negative electrode current collector 100. A structure of the negative electrode 1000 and the negative electrode mixture layer 200 included therein according to an embodiment of the present invention may be understood with reference to FIG. 1.

The negative electrode current collector 100 is not particularly limited as long as it has conductivity without causing a chemical change in a secondary battery, and for example, copper, stainless steel, aluminum, nickel, titanium, calcined carbon, copper or stainless steel surface-treated with carbon, nickel, titanium or silver, an aluminum-cadmium alloy or the like may be used. In addition, fine irregularities may be formed on a surface of the negative electrode current collector 100 to strengthen the bonding force of a negative electrode active material, and the negative electrode current collector 100 may be used in various forms such as films, sheets, foils, nets, porous bodies, foams, and nonwoven fabrics.

The negative electrode mixture layer 200 is formed on at least one side of the negative electrode current collector 100 and may include a silicon-based material and a binder.

In an embodiment, the silicon-based material may function as a negative electrode active material. The silicon-based material has a higher capacity than a carbon-based material, which may achieve the high energy density per volume. The silicon-based material may include one or more selected from the group consisting of SiOₓ (0≤x<2), a Si/C composite, and a Si-alloy. x corresponds to the number ratio of O to Si included in SiOₓ (0≤x<2). The average particle diameter (D₅₀) of SiOx (0≤x<2) may be 4 µm to 9 µm, or 5 µm to 7 µm. When the above range is satisfied, a decrease in the life of the secondary battery due to volume expansion of the silicon-based material may be prevented, and side reactions on a surface of the silicon-based material may be suppressed. The specific surface area of SiOₓ (0≤x<2) may be 4 m²/g to 9 m²/g, or 5 m²/g to 8 m²/g. When the above range is satisfied, the conductive network with a conductive material may be improved. The Si/C composite may be in the form of a carbon material coated on a surface of the SiOₓ (0≤x<2) particles or in the form of carbon dispersed in an atomic state in the SiOₓ (0≤x<2) particle by firing carbon in a state where carbon is bonded to the SiOₓ (0≤x<2) particle. The Si-alloy may be in the form in which Si is alloyed with one or more metals selected from the group consisting of Zn, Al, Mn, Ti, Fe, and Sn. The content of the silicon-based material may be 1 % by weight to 20 % by weight, specifically 1 % by weight to 10 % by weight, based on the total solids weight of the negative electrode mixture layer. When the above range is satisfied, an energy capacity retention rate may be improved while the energy density of the secondary battery is improved.

As the binder, it is preferable to use a binder having good adhesion to the negative electrode current collector, and for example, one or more selected from the group consisting of polyvinylidene fluoride, carboxymethyl cellulose, styrene-butadiene rubber, polyimide, polyamideimide, polyvinyl alcohol, hydroxypropyl cellulose, polyvinyl chloride, carboxylated polyvinyl chloride, polyvinyl fluoride, a polymer including ethylene oxide, polyvinylpyrrolidone, polyurethane, polytetrafluoroethylene, polyethylene, polypropylene, acrylated styrene-butadiene rubber, and epoxy resin may be used. Specifically, styrene-butadiene rubber may be used. The content of the binder may be 0.05 % by weight to 5.0 % by weight, 0.1 % by weight to 5.0 % by weight, 0.1 % by weight to 4.0 % by weight, or 0.1 % by weight to 3.0 % by weight based on the total solids weight of the negative electrode mixture layer. When the above range is satisfied, the resistance characteristics of the secondary battery may be improved while the adhesion at an interface between the negative electrode current collector and the negative electrode mixture layer is maintained.

In general, the binder is non-uniformly present among the negative electrode active materials in the form of small particles. When the binder content on a surface of the negative electrode active material increases, voids between the negative electrode active materials are blocked, resulting in a problem of reducing the insertion of lithium ions transmitted from the positive electrode into the negative electrode. This causes an increase in the resistance of the secondary battery, resulting in the precipitation of a lithium salt on a surface of the negative electrode, leading to a decrease in the capacity retention rate of the secondary battery.

As such, because the distribution of the binder content in the negative electrode active material has a significant impact on the performance of the secondary battery, the present invention aims to minimize the deformation of the negative electrode while improving the capacity retention rate of the secondary battery by optimizing the distribution of the binder content in the negative electrode mixture layer including the negative electrode active material.

The negative electrode mixture layer 200 may include a first layer 210 in contact with the negative electrode current collector 100 on the negative electrode current collector 100 and a second layer 220 in contact with the first layer 210 on the first layer 210. The first layer 210 may be divided into an upper half 211 and a lower half 212 in a thickness direction. The upper half 211 and the lower half 212 may have the same thickness t₁/2. In addition, in an embodiment, the first layer 210 and the second layer 220 may have the same thicknesses t₁. For example, when a length from the surface of the negative electrode current collector 100 to a surface of the negative electrode mixture layer 200 is 100 based on the thickness direction of the negative electrode mixture layer 200, the thickness from the surface of the negative electrode current collector 100 to the surface of the first layer 210 may be 50, and the thickness of the upper half 211 of the first layer may be 25.

The weight ratio of the binders respectively included in the upper half 211 of the first layer and the second layer 220 may be 5:1 or more, specifically 6:1 or more, and more specifically 7:1 or more.

The weight ratio of the binders in the upper half 211 of the first layer and the second layer 220 may be indirectly measured by staining the binders with a metal oxide and then measuring the content of the stained metal using energy dispersive X-ray spectroscopy. An osmium tetroxide (OsO₄), a ruthenium tetroxide (RuO₄), or the like may be used as the metal oxide.

For example, after cutting the negative electrode mixture layer 200 in the thickness direction, the binder contained in the negative electrode mixture layer 200 is stained using an osmium tetroxide (OsO₄), and an atomic ratio value of osmium (Os) in the cross section in the thickness direction of the stained negative electrode mixture layer 200 is measured using energy dispersive X-ray spectroscopy. Because the measured osmium (Os) atomic ratio value of the cross section of the negative electrode mixture layer 200 is correlated with the binder content, the weight ratio of the binders in the upper half 211 of the first layer and the second layer 220 may be calculated from this value.

When the weight ratio of the binders in the upper half 211 of the first layer and the second layer 220 is less than 5:1, the phenomenon of lithium ions being inserted into the negative electrode is reduced, which may cause an increase in resistance of the secondary battery and the precipitation of a lithium salt on the surface of the negative electrode.

In an embodiment, the weight ratio of the binders in the upper half 211 of the first layer and the second layer 220 may be 20:1 or less, specifically 15:1, more specifically 12:1 or less. When the weight ratio of the binders is 20:1 or less, the brittleness of the negative electrode is poor, which may prevent the occurrence of cracks in the negative electrode.

In an embodiment, a composition for forming the first layer 210 may include a binder, and a composition for forming the second layer 220 might not include a binder. However, even when the first layer 210 and the second layer 220 are formed according to this embodiment, a portion of the binder included in the composition for forming the first layer 210 may migrate to the second layer 220, so that the second layer 220 may include a relatively small amount of the binder.

In addition, the silicon-based material included in the negative electrode mixture layer 200 includes silicon (Si) atoms, and when energy dispersive X-ray spectroscopy is used, the silicon (Si) atom may exhibit a color distinct from osmium (Os). Based on this, the measured weight ratio of the binder to silicon in the upper half 211 of the first layer and the second layer 220, and more specifically, the weight ratio of osmium to silicon in the upper half 211 of the first layer and the second layer 220 may be 6 or more. Specifically, the weight ratio of osmium to silicon in the upper half 211 of the first layer and the second layer 220 may be 8 or more, and more specifically, may be 10 or more.

In addition, the weight ratio of the binder to silicon in the upper half 211 of the first layer and the second layer 220 may be 30 or less, specifically 20 or less, and more specifically 16 or less. When the weight ratio of the binder to silicon in the upper half 211 of the first layer and the second layer 220 is 30 or less, the brittleness of the negative electrode is poor, which may prevent the occurrence of cracks in the negative electrode.

In an embodiment, the negative electrode mixture layer 200 may further include a carbon-based material. The carbon-based material may include one or more selected from the group consisting of artificial graphite, natural graphite, hard carbon, soft carbon, carbon black, acetylene black, Ketjen black, super P, and graphene. In an embodiment, each of the first layer 210 and the second layer 220 included in the negative electrode mixture layer 200 may include a silicon-based material and a carbon-based material.

In an embodiment, the negative electrode mixture layer 200 may further include a conductive material to improve conductivity. The conductive material may be one or more selected from the group consisting of natural graphite, artificial graphite, carbon black, acetylene black, Ketjen black, channel black, furnace black, lamp black, summer black, carbon fiber, metal fiber, a carbon fluoride, aluminum powder, nickel powder, a zinc oxide, a potassium titanate, a titanium oxide, and a polyphenylene derivative.

In an embodiment, the negative electrode mixture layer 200 may further include a thickener to secure advantages in the manufacturing process. The thickener may mitigate the problem of the occurrence of cracks on the surface of the negative electrode by strengthening the cohesion of the binder. The thickener may include one or more selected from the group consisting of carboxymethyl cellulose, methyl cellulose, hydroxypropyl cellulose, methyl hydroxypropylcellulose, ethyl hydroxyethyl cellulose, methyl ethyl hydroxyethylene cellulose, and cellulose gum.

In an embodiment, the negative electrode mixture layer 200 may further include carbon nanotubes. The carbon nanotubes may form a conductive network between silicon-based materials, minimizing the problem of isolation of conductive paths as the volume of the silicon-based materials expands due to the long-term use of secondary batteries. The carbon nanotube may include single-walled carbon nanotubes and multi-walled carbon nanotubes. The single-walled carbon nanotubes may more effectively form a conductive network between the silicon-based materials due to their high flexibility, which may improve the energy capacity retention rate of secondary batteries.

The average diameter of the single-walled carbon nanotubes may be from 0.1 nm to 8.0 nm, from 1.5 nm to 5.0 nm, or from 1.5 nm to 3.0 nm. When the above range is satisfied, the average diameter is a value obtained by measuring the diameters of 100 single-walled carbon nanotubes in a negative electrode active material layer through SEM and then calculating the average thereof. The average length of the single-walled carbon nanotubes may be 3 µm to 20 µm, 4 µm to 20 µm, or 5 µm to 20 µm. When the above range is satisfied, the conductive network connecting the silicon-based materials may be maintained even when the volume of the silicon-based material is excessively changed, so that the energy capacity retention rate of the secondary battery may be further improved. The average length is a value obtained by measuring the lengths of 100 single-walled carbon nanotubes in the negative electrode active material layer through SEM and then calculating the average thereof.

The multi-walled carbon nanotubes means carbon nanotubes in which there are multiple single-walled carbon nanotubes. The multi-walled carbon nanotubes are more economical than the single-walled carbon nanotubes, and may be placed on a surface of the silicon-based materials together with the single-walled nanotubes, contributing to the formation of a conductive network with adjacent silicon-based materials. The average diameter of the multi-walled carbon nanotubes may be from 5 nm to 200 nm, from 5 nm to 100 nm, or from 5 nm to 50 nm. When the above range is satisfied, the multi-walled carbon nanotubes may easily disperse in the negative electrode active material composition, and a conductive network may be effectively formed between the silicon-based materials. The average diameter is a value obtained by measuring the diameters of 100 multi-walled carbon nanotubes in the negative electrode mixture layer 200 through SEM and then calculating the average thereof. The average length of the multi-walled carbon nanotubes may be 0.1 µm to 100 µm, 0.1 µm to 50 µm, or 0.1 µm to 3 µm. When the above range is satisfied, the formation of a conductive network may be maximized even with a small content in the negative electrode active material composition. The average length is a value obtained by measuring the lengths of 100 multi-walled carbon nanotubes in the negative electrode mixture layer 200 through SEM and then calculating the average thereof.

The loading amount of the negative electrode mixture layer 200 may be 4 mg/cm² to 20 mg/cm² , 6 mg/cm² to 18 mg/cm² or 8 mg/cm² to 16 mg/cm². When the above range is satisfied, the capacity of the secondary battery may be increased and the uneven distribution of the binder or the conductive material may be suppressed. The loading amount may mean the sum of the solid content weights after the negative electrode mixture layer is dried on the negative electrode current collector 100 or the sum of the solid content weights after a rolling process. For example, after a specimen is obtained by punching at least five regularly spaced points in the longitudinal direction of the negative electrode into a circle, the sum of the weights of the negative electrode mixture layer 200 in the specimen may be measured and calculated as the loading amount of the negative electrode mixture layer 200.

### <Kit for preparing negative electrode mixture layer>

A kit for preparing negative electrode mixture layer according to the present invention may include: a first composition including a silicon-based material and a binder; and a second composition including the silicon-based material but not including the binder.

The kit for preparing negative electrode mixture layer according to the present invention may include the first composition and the second composition.

The first composition may include a silicon-based material and a binder. The silicon-based material may function as a negative electrode active material as described above. In addition, the first composition may further include a carbon-based material functioning as the negative electrode active material.

In addition, the binder may improve the adhesion between the negative electrode current collector and the negative electrode active material to improve the capacity retention rate of the secondary battery, and may include, for example, styrene-butadiene rubber.

In addition, in an embodiment, the first composition may further include the above-described conductive material to improve conductivity. In addition, in an embodiment, the first composition may further include the above-described thickener to secure advantages in the manufacturing process.

In an embodiment, the first composition may be in a form in which the above-described silicon-based material, binder, and the like are contained in a solvent, and the solvent may be, for example, water, but is not limited thereto.

The second composition includes a silicon-based material and might not include a binder.

The silicon-based material included in the second composition may function as a negative electrode active material as described above. In addition, the second composition may further include a carbon-based material functioning as a negative electrode active material.

In addition, because the second composition does not include a binder, an increase in resistance of the secondary battery and precipitation of a lithium salt on the surface of the negative electrode may be prevented.

In addition, the second composition may further include the above-described conductive material to improve conductivity. In addition, in an embodiment, the second composition may further include the above-described thickener to secure advantages in the manufacturing process.

In an embodiment, the second composition may be in a form in which the above-described silicon-based material or the like is contained in a solvent, and the solvent may be, for example, water, but is not limited thereto.

### <Negative electrode manufacturing method>

A negative electrode manufacturing method according to the present invention may include: forming a first layer by applying a first composition, which includes a silicon-based material and a binder, onto a negative electrode current collector; and forming a second layer by applying a second composition, which includes the silicon-based material but does not include the binder, onto the first layer.

First, the negative electrode manufacturing method according to the present invention may include forming the first layer. The first layer may be formed by applying the first composition onto the negative electrode current collector. The first composition may include the silicon-based material and the binder, and is the same as the first composition described in the above-described kit for preparing negative electrode mixture layer, and thus will not be described repeatedly below.

Next, the negative electrode manufacturing method according to the present invention may include forming the second layer. The second layer may be formed by applying the second composition onto the negative electrode current collector. The second composition may include the silicon-based material but might not include the binder, and is the same as the second composition described in the above-described kit for preparing negative electrode mixture layer, and thus will not be described repeatedly below.

The forming processes of the first layer and the second layer may be performed by a known method. In an embodiment, the first and second layers may be formed by applying the first composition onto the negative electrode current collector and then applying the second composition without drying the first composition applied onto the negative electrode current collector, followed by drying. Alternatively, the first and second layers may be formed by applying the first composition onto the negative electrode current collector and then drying the same, and then applying the second composition and then drying the same.

The first and second layers may be formed in a wet-on-wet manner, for example, by a slot-die coater, roll-coater, knife coater, extrusion coater, or gravure-coater.

### <Secondary battery>

A secondary battery according to the present invention includes the above-described negative electrode, a positive electrode, and a separator interposed between the negative electrode and the positive electrode.

The secondary battery includes the negative electrode, and as the negative electrode, the negative electrode current collector, the first layer, the second layer, and the like described in connection with the negative electrode described above may be used in the same manner.

The secondary battery includes, in addition to the negative electrode of the present invention, the positive electrode and the separator. The positive electrode may include a positive electrode current collector and an active material layer arranged on the positive electrode current collector. The active material layer may include an active material. For example, the positive electrode active material layer may include a positive electrode active material, and the positive electrode active material may be a material which lithium ions may be inserted into and extracted from.

The positive electrode active material may be a lithium metal oxide. For example, the positive electrode active material may be one of a lithium manganese-based oxide, a lithium nickel-based oxide, a lithium cobalt-based oxide, a lithium nickel manganese-based oxide, a lithium nickel cobalt aluminum-based oxide, a lithium iron phosphate-based compound, a lithium manganese phosphate-based compound, a lithium cobalt phosphate-based compound, or a lithium vanadium phosphate-based compound, and is not necessarily limited to a specific example.

The separator may be interposed between the negative electrode and the positive electrode. The separator is configured to prevent electrical short-circuit between the negative electrode and the positive electrode and to generate ion flow. The separator may include a porous polymer film or a porous nonwoven fabric. The porous polymer film may be composed of a single layer or multiple layers including polyolefin-based polymers such as an ethylene polymer, a propylene polymer, an ethylene/butene copolymer, an ethylene/hexene copolymer, or an ethylene/methacrylate copolymer. The porous nonwoven fabric may include high melting point glass fibers, or polyethylene terephthalate fibers. However, the present invention is not limited thereto, and depending on an embodiment, the separator may be a Ceramic Coated Separator (CCS) including ceramic.

The negative electrode, the positive electrode, and the separator may be manufactured into an electrode assembly by a winding, lamination, folding, or zigzag stacking process. In addition, the electrode assembly may be provided with an electrolyte to be made into the secondary battery according to the present invention. The secondary battery may be any one of a cylindrical, prismatic, pouch, or coin battery using cans, but is not limited thereto.

The electrolyte may be a non-aqueous electrolyte. The electrolyte may include a lithium salt and an organic solvent. The organic solvent may include at least one of propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, or tetrahydrofuran.

### [Modes of the Invention]

Hereinafter, the present invention will be described in more detail with reference to Examples and Comparative Examples. However, the following Examples and Comparative Examples are only illustrative for describing the present invention in more detail, and the present invention is not limited by the following Inventive Examples (referred to also as Examples) and Comparative Examples.

### Inventive Examples

### Inventive Example 1

### <Preparation of first composition>

A first negative electrode active material composition was prepared by mixing a negative electrode active material, which is a mixture of artificial graphite (D₅₀: 13 µm) and natural graphite (D₅₀: 10 µm), a silicon oxide (SiO), multi-walled carbon nanotubes, carboxymethyl cellulose, and styrene-butadiene rubber at a ratio of 92.8:3:0.4:1.2:2.6 by weight.

### <Preparation of second composition>

A second negative electrode active material composition was prepared by mixing a negative electrode active material, which is a mixture of artificial graphite (D₅₀: 13 µm) and natural graphite (D₅₀: 10 µm), a silicon oxide (SiO), multi-walled carbon nanotubes, and carboxymethyl cellulose at a ratio of 95.4:3:0.4:1.2 by weight.

### <Manufacture of negative electrode>

After applying the prepared first composition onto a copper thin film, the second negative electrode active material composition was applied onto the first composition. Then, drying was performed under a vacuum of 130 °C for 1 hour to manufacture a negative electrode provided with a first layer manufactured from the first composition and a second layer manufactured from the second composition. The loading ratio of the manufactured first and second layers was 5:5.

### <Manufacture of positive electrode>

A slurry was prepared by mixing Li[Ni_{0.88}Co-_{0.10}Mn_{0.02}]O₂ as an active material, carbon black, and polyvinylidene fluoride (PVdF) at a ratio of 96:3:1 by weight. The slurry was uniformly applied to an aluminum foil and vacuum dried to manufacture a positive electrode.

### <Manufacture of secondary battery>

The negative electrode and the positive electrode were each notched to a predetermined size and stacked, and an electrode cell was formed by interposing a PE separator between the negative electrode and the positive electrode, and then a tab portion of each of the negative electrode and the positive electrode was welded. An assembly of the welded negative electrode/separator/positive electrode was placed in a pouch, and three sides except for an electrolyte injection portion were sealed.

An electrolyte was injected through the electrolyte injection portion, and the remaining sides were sealed and impregnated for 12 hours or more. The electrolyte used was a solution of 1M LiPF₆ dissolved in a solvent which is a mixture of EC/EMC/DEC.

Thereafter, pre-charging was performed for 36 minutes at a current corresponding to 0.25C. After 1 hour, degassing was performed, and after aging for 24 hours or more, formation charging and discharging were performed (charge condition CC-CV 0.2C 4.2V 0.05C CUT-OFF, discharge condition CC 0.2C 2.5V CUTOFF). Afterwards, standard charging and discharging were performed to manufacture a secondary battery (charge condition CC-CV 0.33C 4.2V 0.05C CUT-OFF, discharge condition CC 0.33C 2.5V CUT-OFF).

### Inventive Example 2

### <Preparation of first composition>

A first negative electrode active material composition was prepared by mixing a negative electrode active material, which is a mixture of artificial graphite (D₅₀: 13 µm) and natural graphite (D₅₀: 10 µm), a silicon oxide (SiO), multi-walled carbon nanotubes, carboxymethyl cellulose, and styrene-butadiene rubber at a ratio of 92.8:3:0.4:1.2:2.6 by weight.

### <Preparation of second composition>

A second negative electrode active material composition was prepared by mixing a negative electrode active material, which is a mixture of artificial graphite (D₅₀: 13 µm) and natural graphite (D₅₀: 10 µm), a silicon oxide (SiO), multi-walled carbon nanotubes, and carboxymethyl cellulose at a ratio of 95.4:3:0.4:1.2 by weight.

### <Manufacture of negative electrode>

After applying the prepared first composition onto a copper thin film, the second negative electrode active material composition was applied onto the first composition. Then, drying was performed under a vacuum of 130 °C for 1 hour to manufacture a negative electrode provided with a first layer manufactured from the first composition and a second layer manufactured from the second composition. The loading ratio of the manufactured first and second layers was 4:6.

### <Manufacture of positive electrode>

A slurry was prepared by mixing Li[Ni_{0.88}Co-_{0.10}Mn_{0.02}]O₂ as an active material, carbon black, and polyvinylidene fluoride (PVdF) at a ratio of 96:3:1 by weight. The slurry was uniformly applied to an aluminum foil and vacuum dried to manufacture a positive electrode.

### <Manufacture of secondary battery>

The negative electrode and the positive electrode were each notched to a predetermined size and stacked, and an electrode cell was formed by interposing a PE separator between the negative electrode and the positive electrode, and then a tab portion of each of the negative electrode and the positive electrode was welded. An assembly of the welded negative electrode/separator/positive electrode was placed in a pouch, and three sides except for an electrolyte injection portion were sealed.

An electrolyte was injected through the electrolyte injection portion, and the remaining sides were sealed and impregnated for 12 hours or more. The electrolyte used was a solution of 1M LiPF₆ dissolved in a solvent which is a mixture of EC/EMC/DEC.

Thereafter, pre-charging was performed for 36 minutes at a current corresponding to 0.25C. After 1 hour, degassing was performed, and after aging for 24 hours or more, formation charging and discharging were performed (charge condition CC-CV 0.2C 4.2V 0.05C CUT-OFF, discharge condition CC 0.2C 2.5V CUTOFF). Afterwards, standard charging and discharging were performed to manufacture a secondary battery (charge condition CC-CV 0.33C 4.2V 0.05C CUT-OFF, discharge condition CC 0.33C 2.5V CUT-OFF).

### Comparative Example 1

### <Preparation of first negative electrode active material composition>

A first negative electrode active material composition was prepared by mixing a negative electrode active material, which is a mixture of artificial graphite (D₅₀: 13 µm) and natural graphite (D₅₀: 10 µm), a silicon oxide (SiO), multi-walled carbon nanotubes, carboxymethyl cellulose, and styrene-butadiene rubber at a ratio of 93:3:0.4:1.2:2.4 by weight.

### <Preparation of second negative electrode active material composition>

A second negative electrode active material composition was prepared by mixing a negative electrode active material, which is a mixture of artificial graphite (D₅₀: 13 µm) and natural graphite (D₅₀: 10 µm), a silicon oxide (SiO), multi-walled carbon nanotubes, carboxymethyl cellulose, and styrene-butadiene rubber at a ratio of 95.2:3:0.4:1.2:0.2 by weight.

### <Manufacture of negative electrode>

A negative electrode was manufactured by the same process as in Inventive Example 1, except that the first composition and the second composition described above were used.

### <Manufacture of secondary battery>

A secondary battery was manufactured by the same processes of manufacturing the positive electrode and the secondary battery as in Inventive Example 1, except that the negative electrode described above was used.

### Comparative Example 2

### <Preparation of first composition>

A first negative electrode active material composition was prepared by mixing a negative electrode active material, which is a mixture of artificial graphite (D₅₀: 13 µm) and natural graphite (D₅₀: 10 µm), a silicon oxide (SiO), multi-walled carbon nanotubes, carboxymethyl cellulose, and styrene-butadiene rubber at a ratio of 93.4:3:0.4:1.2:2.0 by weight.

### <Preparation of second composition>

A second negative electrode active material composition was prepared by mixing a negative electrode active material, which is a mixture of artificial graphite (D₅₀: 13 µm) and natural graphite (D₅₀: 10 µm), a silicon oxide (SiO), multi-walled carbon nanotubes, carboxymethyl cellulose, and styrene-butadiene rubber at a ratio of 94.8:3:0.4:1.2:0.6 by weight.

### <Manufacture of negative electrode>

A negative electrode was manufactured by the same process as in Inventive Example 1, except that the first composition and the second composition described above were used.

### <Manufacture of secondary battery>

A secondary battery was manufactured by the same processes of manufacturing the positive electrode and the secondary battery as in Inventive Example 1, except that the negative electrode described above was used.

### Comparative Example 3

### <Preparation of first composition>

A first negative electrode active material composition was prepared by mixing a negative electrode active material, which is a mixture of artificial graphite (D₅₀: 13 µm) and natural graphite (D₅₀: 10 µm), multi-walled carbon nanotubes, carboxymethyl cellulose, and styrene-butadiene rubber at a ratio of 95.8:0.4:1.2:2.6 by weight.

### <Preparation of second composition>

A second negative electrode active material composition was prepared by mixing a negative electrode active material, which is a mixture of artificial graphite (D₅₀: 13 µm) and natural graphite (D₅₀: 10 µm), multi-walled carbon nanotubes, and carboxymethyl cellulose at a ratio of 98.4:0.4:1.2 by weight.

### <Manufacture of negative electrode>

A negative electrode was manufactured by the same process as in Inventive Example 1, except that the first composition and the second composition described above were used.

### <Manufacture of secondary battery>

A secondary battery was manufactured by the same processes of manufacturing the positive electrode and the secondary battery as in Inventive Example 1, except that the negative electrode described above was used.

### Experimental Examples

### Experimental Example 1 - Measurement of binder content distribution in negative electrode

To detect a binder in the negative electrode, the negative electrodes manufactured in Inventive Example 1, Inventive Example 2, Comparative Example 1, and Comparative Example 2 were stained with an osmium tetroxide (OsO₄). After that, a negative electrode mixture layer was cut and SEM-EDAX analysis was performed on a cross section thereof. As a result of SEM-EDAX analysis, the distribution of osmium (Os) elements in the cross section of the negative electrode mixture layer shows the distribution of styrene-butadiene rubber, a binder. The cross section in the thickness direction of the negative electrode mixture layer stained with an osmium tetroxide (OsO₄) was divided into two layers, that is, a first layer, which is an area relatively close to a negative electrode current collector, and a second layer, which is an area relatively far from the negative electrode current collector. In addition, a cross section in the thickness direction of the first layer was divided into two layers, that is, a lower half of the first layer, which is an area relatively close to the negative electrode current collector, and an upper half of the first layer, which is an area relatively far from the negative electrode current collector.

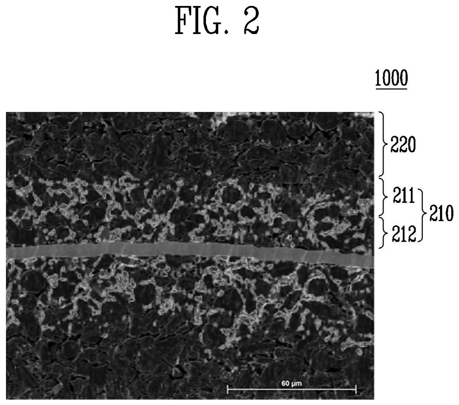

The elemental osmium (Os) content in the upper half of the first layer and the second layer was measured, and the results are shown in FIG. 2 and Table 1 below.

In addition, in the SEM-EDAX analysis, the weight ratio of osmium (Os) element/silicon (Si) element in the upper half of the first layer and the second layer was measured using the characteristics of silicon showing a different color from osmium element, and the results are shown in Table 1 below.

### Experimental Example 2 - Measurement of capacity retention rate

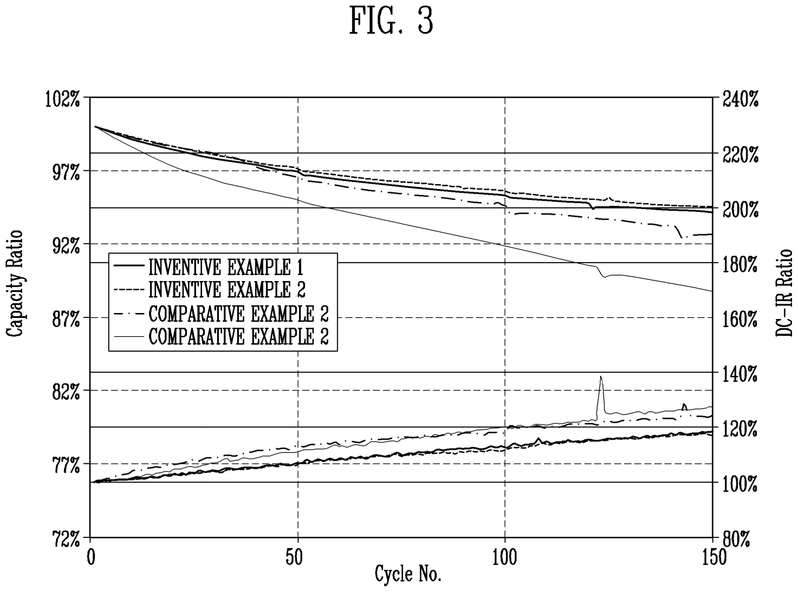

For the negative electrodes manufactured in Inventive Example 1, Inventive Example 2, Comparative Example 1, and Comparative Example 2, the discharge capacity was measured by repeatedly charging (CC/CV 2.0C 4.2V 0.1C CUT-OFF) and discharging (CC 0.33C 2.5V CUT-OFF) the negative electrodes, and the percentage of the discharge capacity at 150 times divided by the discharge capacity at one time was calculated as the capacity retention rate, and the results are shown in Table 1 and FIG. 3 below.

**[Table 1]**

| | | Inventive Example | | Comparative Example | |
|---|---|---|---|---|---|
| | | 1 | 2 | 1 | 2 |
| Negative electrode | Binder content by weight in upper half of first layer: binder content by weight in second area ¹⁾ | 7.88:1 | 10.21.:1 | 3.47:1 | 2.05:1 |
| | Weight ratio of binder/silicon in upper half of first layer: weight ratio of binder/silicon in second layer ²⁾ | 10.92:1 | 15.62:1 | 4.37:1 | 2.58:1 |
| | Loading amount of negative electrode mixture layer (mg/cm²) | 9.6 | 9.6 | 9.6 | 9.6 |
| Capacity retention rate (%) | | 94.2 | 94.0 | 92.3 | 88.8 |
| ¹⁾ The binder content by weight is obtained by measuring the binder content by weight in the upper half of the first layer and the second layer based on the content of osmium atoms after staining the binder with an osmium tetroxide (OsO₄). | | | | | |
| ²⁾ The weight ratio of binder/silicon is obtained by measuring the weight ratio of binder/silicon in the upper half of the first layer and the second layer based on the ratio of osmium atoms to silicon atoms after staining the binder with an osmium tetroxide (OsO₄). | | | | | |

According to Table 1 above, it can be confirmed that Inventive Example 1 and Inventive Example 2 in which the content by weight of the styrene-butadiene rubber as the binder in the upper half of the first layer and the second layer satisfies 5:1 or more are superior in the capacity retention rate of the secondary battery compared to Comparative Example 1 and Comparative Example 2. Specifically, the active material type, the binder type, and the loading amount of the negative electrode mixture layer used in Inventive Example 1, Inventive Example 2, Comparative Example 1, and Comparative Example 2 are the same, but Comparative Example 1 and Comparative Example 2 are different from Inventive Example 1 and Inventive Example 2 in that the content by weight of the styrene-butadiene rubber in the upper half of the first layer and the second layer is less than 5:1 in Comparative Example 1 and Comparative Example 2. That is, in Comparative Example 1 and Comparative Example 2, it can be seen that as the binder is included in the second composition, the content of the styrene-butadiene rubber included in the second layer is relatively large, and the resistance in the negative electrode mixture layer increases, resulting in a decrease in the capacity retention rate of the secondary battery. On the other hand, in Inventive Example 1 and Inventive Example 2, it can be seen that as the binder is not included in the second composition, the content of the styrene-butadiene rubber included in the second layer was relatively small, and the resistance in the negative electrode mixture layer decreases, resulting in the excellent capacity retention rate. More specifically, referring to FIG. 3, it can be seen that the capacity retention rates of the secondary batteries including the negative electrodes of Inventive Example 1 and Inventive Example 2 were 94.2 % and 94.0 %, respectively, when 150 times of charge and discharge were performed, whereas the capacity retention rate of the secondary battery including the negative electrode of Comparative Example 1 was only 92.3 % when 150 times of charge and discharge were performed, and the capacity retention rate of the secondary battery including the negative electrode of Comparative Example 2 was only 88.8 % when 150 times of charges and discharge were performed.

In addition, it can be confirmed that the DC resistance increase rate of each of the secondary batteries including the negative electrodes of Inventive Example 1 and Inventive Example 2 is 20 % or less, when 150 times of charge and discharge are performed, but the DC resistance increase rate of each of the secondary batteries including the negative electrodes of Comparative Example 1 and Comparative Example 2 exceeds 20 %.

### <Experimental Example 3>

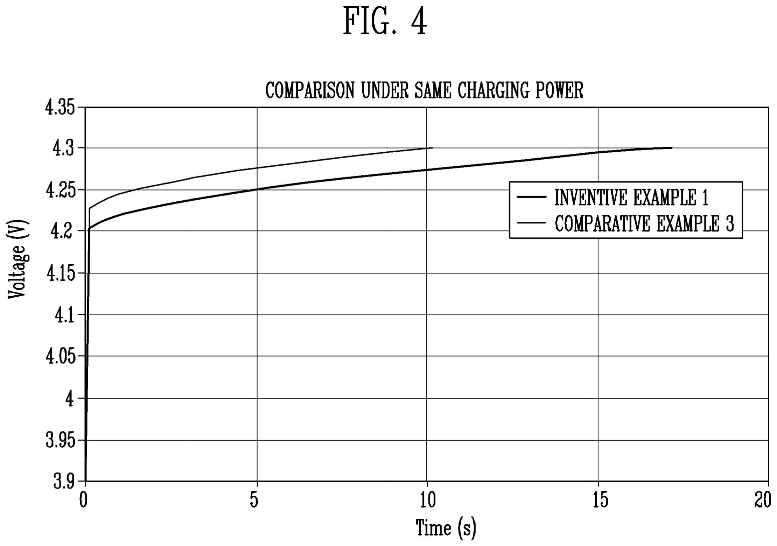

The room temperature actual output power was measured for the negative electrodes manufactured in Inventive Example 1 and Comparative Example 3 (1,050W 4.3V CUT-OFF), and the cell resistance was compared and shown in FIG. 4.

As shown in FIG. 4, Inventive Example 1 has a low overvoltage and a long power holding time when the same power is applied, while Comparative Example 3 has a higher overvoltage and a power holding time of 58.7 % compared to Inventive Example 1.

That is, when graphite is used alone in the second layer as in Comparative Example 3, pores of the negative electrode active material are blocked in an electrode rolling process, thereby causing the power characteristics to deteriorate. On the other hand, when a silicon-based active material is mixed as in Inventive Example 1, the electrode rolling characteristics are improved, so that the power characteristics may be improved, and the energy density of the cell may be improved by applying silicon with a high utilization capacity per volume.

### [Description of reference numeral]

100: a negative electrode current collector
200: a negative electrode mixture layer
210: a first layer
211: an upper half of the first layer
212: a lower half of the second layer
220: a second layer
1000: a negative electrode

## Claims

1. A negative electrode, comprising:
a negative electrode current collector; and
a negative electrode mixture layer formed on at least one side of the negative electrode current collector and including a silicon-based material and a binder,
wherein the negative electrode mixture layer includes a first layer in contact with the negative electrode current collector on the negative electrode current collector and a second layer in contact with the first layer on the first layer, and
wherein a weight ratio of the binders respectively included in an upper half of the first layer in a thickness direction and the second layer is 5:1 or more.

2. The negative electrode of claim 1, wherein a thickness of the upper half of the first layer is half of a total thickness of the first layer.

3. The negative electrode of claim 1, wherein the binder includes styrene-butadiene rubber.

4. The negative electrode of claim 1, wherein content of the binder is 0.05 % by weight to 5.0 % by weight based on a total solids weight of the negative electrode mixture layer.

5. The negative electrode of claim 1, wherein the silicon-based material includes one or more selected from a group consisting of SiOₓ (0≤x<2), a Si/C composite, and a Si alloy.

6. The negative electrode of claim 1, wherein a weight ratio of the binder to silicon in the upper half of the first layer in the thickness direction and the second layer is 6 or more.

7. The negative electrode of claim 1, wherein content of the silicon-based material is 1 % by weight to 20 % by weight based on a total solids weight of the negative electrode mixture layer.

8. The negative electrode of claim 1, wherein the negative electrode mixture layer further includes a carbon-based material.

9. The negative electrode of claim 8, wherein the carbon-based material is one or more selected from a group consisting of artificial graphite, natural graphite, hard carbon, soft carbon, carbon black, acetylene black, Ketjen black, super P, and graphene.

10. The negative electrode of claim 8, wherein each of the first layer and the second layer includes the silicon-based material and the carbon-based material.

11. The negative electrode of claim 5, wherein the negative electrode mixture layer further includes carbon nanotubes.

12. The negative electrode of claim 11, wherein the carbon nanotubes include one or more selected from a group consisting of single-walled carbon nanotubes and multi-walled carbon nanotubes.

13. The negative electrode of claim 1, wherein a loading amount of the negative electrode mixture layer is 4 to 20 mg/cm².

14. A kit for preparing negative electrode mixture layer, comprising:
a first composition including a silicon-based material and a binder; and
a second composition including a silicon-based material but not including the binder.

15. The kit for preparing negative electrode mixture layer of claim 14, wherein each of the first composition and the second composition further includes a carbon-based material.

16. A negative electrode manufacturing method, comprising:
forming a first layer by applying a first composition, which includes a silicon-based material and a binder, onto a negative electrode current collector; and
forming a second layer by applying a second composition, which includes a silicon-based material but does not include the binder, onto the first layer.

17. The negative electrode manufacturing method of claim 16, wherein each of the first composition and the second composition further includes a carbon-based material.
